# EUROPEAN PATENT SPECIFICATION

(11) **EP 1 948 485 B1**
(45) Date of publication and mention of the grant of the patent: **11.04.2012**
(21) Application number: 06813010.3
(22) Date of filing: 15.11.2006
(51) Int. Cl.: F15B 15/19, F15B 15/20, F15B 15/22, B60N 2/427

(54) **A VEHICLE SAFETY DEVICE**
FAHRZEUGSICHERHEITSVORRICHTUNG
DISPOSITIF DE SECURITE DE VEHICULE

(30) Priority: 18.11.2005 GB 0523534
(43) Date of publication of application: 30.07.2008
(73) Proprietor: Autoliv Development AB, 447 83 Vårgårda (SE)
(72) Inventor: HAGUENAUER, Bertrand, F-762 20 Gournay en Bray (FR); ARNAUD, Denis, F-78440 Lainville-en-Vexin (FR); JACQMARCQ, Thierry, F-60850 Cuigy en Bray (FR); SIMEON, Samuel, F-76440 Pommereux (FR); MORICEAU, Cécile, F-76000 Rouen (FR)
(74) Representative: Beattie, Alex Thomas Stewart
(86) International application number: PCT/SE2006/001287
(87) International publication number: WO 2007/058585

(56) References cited:
- WO-A1-2004/071821
- WO-A1-2004/071821
- WO-A2-01/74634
- DE-C1- 19 961 019
- DE-U1- 20 214 904
- FR-A1- 2 219 035
- GB-A- 1 406 373
- JP-A- 10 067 300
- JP-A- 2000 033 850
- US-A- 3 891 271
- US-A- 3 891 271
- US-A- 6 089 605
- US-A- 6 089 605
- US-A1- 2002 005 640
- US-A1- 2004 222 680

## Description

**THE PRESENT INVENTION** relates to a vehicle safety device, and more particularity relates to a vehicle safety device intended for use in a motor vehicle in the form of an automobile or car.

It has been proposed previously to use various vehicle safety devices which are deployed in response to signals from appropriate sensors, the signals indicating that an accident is occurring or is likely to occur. Many of the safety devices incorporate a piston-and-cylinder unit, which is driven by gas from a pyrotechnic charge in response to an appropriate control signal, the overall length of the piston and cylinder unit increasing.

One example of such a safety device is a hood (or bonnet) lifter which is positioned towards the rear edge of the hood or bonnet and which is actuated to raise the rear edge of the hood or bonnet if the vehicle is involved in an accident in which the vehicle strikes a pedestrian. Should the head of the pedestrian strike the hood or bonnet, the impact will occur at an instant when the hood or bonnet is raised above the engine block of the vehicle. Thus the hood or bonnet can deform downwardly, thus decelerating the head of the pedestrian over a period of time, before the under-side of the hood or bonnet establishes contact with the underlying engine block. Other safety devices which use piston and cylinder units of the type being described include seat-belt pretensioners.

It is desirable for the piston, within the cylinder, to have a variable flow resistance. The variable flow resistance will effect the operating characteristic of the piston and cylinder unit, influencing such characteristics as the damping of the movement of the piston as it approaches the end of its "outward" stroke, and also providing a desirable energy absorbing action as the piston is driven back into the cylinder during an accident situation.

It has been proposed previously to provide piston and cylinder units of the type described in which there is a variable flow resistance to gas as the piston moves within the cylinder. For example, German Gebrauchsmusterschrift 202 14904 U1 shows an arrangement in which the piston head is provided with an aperture, and a shaft of varying diameters is provided which extends through the aperture. As the piston moves the effective cross-sectional area of the flow path extending through the aperture in the piston head varies, depending upon the diameter of the part of the shaft present within the hole. The flow resistance is thus a function of the position of the piston, but the flow resistance is the same when the piston is moving upwardly and when the piston is moving downwardly.

US3891271 discloses safety belt system for the occupant of or passenger in a vehicle, in particular an automobile. The system comprises a strap belt, and a mechanism whereby rebound movement of the belt is prohibited after the vehicle sustains sudden deceleration during which the occupant is projected forwards, stressing the belt.

JP 10 067300 discloses a pretensioner to prevent gas pressure applied on a piston to remove looseness of a seat belt at the time of emergency from interfering motion of an energy absorption mechanism. Gas vent holes are provided passing through along the moving direction of a piston on a base end part of the piston and are free to hold gas pressure until a pretensioner works while the gas pressure does not fall in a short period of time by viscous resistance of passing gas and to fall inside pressure of gas remaining in the inside of a cylinder down to a required sufficient value until an energy absorption mechanism works.

US 2002/05640 discloses a pretensioner mechanism for a webbing retractor, which supplies gas in a cylinder. A slider substantially closes a gas passing portion, and a piston thereby starts to move upward. A fitting portion pushes the slider upward so as to maintain the closure of the gas passing portion, and a webbing is taken up. When an energy absorbing member in a force limiter mechanism is deformed such that the webbing is pulled out, the piston is moved downward, the gas passing portion is opened by the slider so as to discharge the gas in the cylinder from the gas passing portion.

The present invention seeks to provide an improved safety device.

According to this invention there is provided a vehicle safety device, the vehicle safety device incorporating a piston and cylinder unit, the piston being moveable relative to the cylinder, the cylinder being divided into first and second internal regions by the piston, there being a gas flow connection between the regions, the piston being provided with a moveable element, the moveable element being moveable from a first position to a second position when the piston is being driven out of the cylinder, the element, in its second position, serving to change the flow resistance of the flow connection, wherein the flow resistance of the gas flow connection is changed in response to the piston reaching a predetermined position relative to the cylinder when the piston is being driven out of the cylinder, the changed flow resistance being maintained when the piston subsequently moves back into the cylinder, wherein the flow connection comprises two gas flow paths, and wherein the element, when in the second position, obstructs one of said two gas flow paths.

Advantageously the gas flow connection comprises a combination of passages extending through a head assembly of the piston, the passages defining a first gas flow path having a first minimum cross-sectional area and a second gas flow path having a second minimum cross-sectional area, greater than the first minimum cross-sectional area.

Preferably the element, when in the second position, obstructs the second gas flow path.

Conveniently the element is a slide valve element, the slide valve element being slideable relative to the rest of the piston, the slide valve element being moveable in response to engagement with an abutment formed within the cylinder.

In one embodiment the gas flow connection comprises a bore extending axially from the end face of the piston through the piston head to the piston rod, there being two transverse bores extending from the axial bore to the side-face of the piston, the slide valve element being moveable to a second position in which it closes one of the apertures extending to the side-face of the piston.

In an alternative embodiment the flow connection comprises a passage extending from an end face of the piston towards the piston rod, in combination with a further passage extending to a side-face of the piston assembly forming a first flow path and an annular flow passage surrounding part of the piston head between the piston head and the slide valve member forming a second flow path, the slide valve member being moveable from the initial position in which the passage surrounding the piston head is open to a second position in which the passage surrounding the piston head is closed.

Conveniently the piston head has a portion of increasing diameter and the slide valve, which surrounds the piston head, has a bore with a corresponding portion of increasing diameter.

Preferably the moveable element is engageable with part of the cylinder to reset the element to its initial position when the piston is returned to its initial position.

In a further embodiment the element is a slide valve element, which is slideable relative to the rest of the piston, the slide valve element surrounding part of the piston rod, the slide valve element being movable towards the first position, relative to the piston, as a consequence of the piston moving in one direction, and being moveable to a second position, relative to the piston, as consequence of the piston moving in the opposite direction.

Conveniently the gas flow connection comprises a bore extending from the end face of the piston through the piston head to the piston rod, there being axially spaced apart transverse bores extending from the axial bore to the side of the piston, the slide valve element, when in its second position, closing at least one of the axially spaced bores.

Preferably the slide valve element surrounds part of the piston rod extending between the head of the piston and a radially enlarged portion of the piston rod, the said at least one of the axially spaced bores which is closed by the slide valve element opening at a position between the radially enlarged portion and the piston head.

Advantageously a mount is provided to fix the cylinder to the chassis of the vehicle.

Conveniently the cylinder is provided with a source of gas configured to be activated in response to a signal.

Preferably the source of gas comprises a pyrotechnic charge, the pyrotechnic charge being provided with an actuating squib to ignite the charge in response to an electric signal.

Conveniently there are a plurality of sources of gas prepared for successive activation.

In one embodiment the safety device is in the form of a hood or bonnet-lifter, but the safety device may be in the form of a belt pretensioner or may be in the form of a pelvis restraint, the piston and cylinder being located to raise the central part of a seat cushion when the safety device is operated.

In order that the invention may be more readily understood, and so that further features thereof may be appreciated, the invention will now be described, by way of example, with reference to the accompanying drawings in which:
FIGURE 1 is a diagrammatic sectional view through a safety device in accordance with the invention in an initial condition,
FIGURE 2 is a sectional view corresponding to Figure 1 showing the device in a subsequent condition,
FIGURE 3 is a view corresponding to Figure 2 showing the device in yet a further subsequent condition,
FIGURE 4 is a view corresponding to Figure 3 showing the device in yet another subsequent condition,
FIGURE 5 is a sectional view through an alternate embodiment of safety device illustrating the safety device in a first condition,
FIGURE 6 is a view illustrating the major components of Figure 5, showing the components of the safety device in a subsequent condition,
FIGURE 7 is a view corresponding to Figure 6 showing the components in a further subsequent condition,
FIGURE 8 is a view corresponding to Figure 7 showing the components in yet a further subsequent condition,
FIGURE 9 is a view corresponding to Figure 8 showing the components in a further subsequent condition,
FIGURE 10 is an enlarged view of part of the piston head assembly of the piston of the embodiments of Figures 5 to 9 showing the components thereof in a first condition,
FIGURE 11 is a view corresponding to Figure 10 showing the components in a subsequent condition,
FIGURE 12 is a perspective view of a slide valve element,
FIGURE 13 is a further perspective view of a slide valve element,
FIGURE 14 is a view of further safety device incorporating a piston and cylinder unit of the type described with reference to Figures 5 to 13,
FIGURE 15 is a diagrammatic view of a further form of safety device incorporating a piston and cylinder unit of the type described with reference to Figures 5 to 13,
FIGURE 16 is a sectional view showing the principal components of another embodiment of the invention in a first condition,
FIGURE 17 is a view corresponding to Figure 16 showing the components in a subsequent position, and
FIGURE 18 is a view corresponding to Figure 17 showing the components in a further subsequent position.

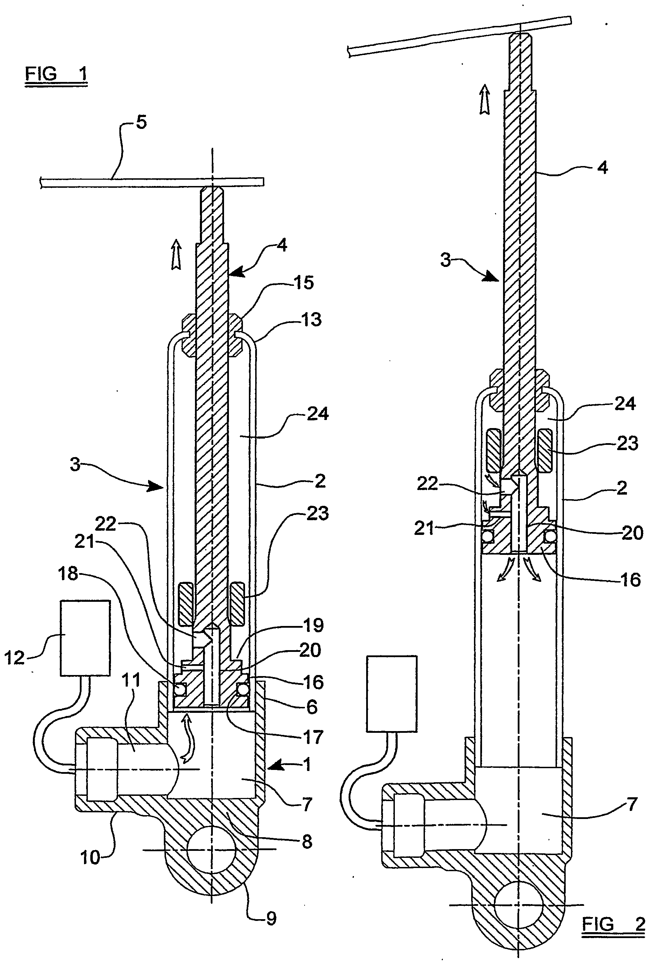

Figures 1 to 4 illustrate a safety device in the form of a hood (or bonnet) lifter. The safety device incorporates a lower housing 1, the lower housing 1 being connected to the lower part of a vertical tube 2, the tube 2 containing a piston assembly 3. The piston assembly 3 includes a piston rod which extends from the uppermost end of the cylinder 2 to engage the underside of part of the hood or bonnet 5 of a motor vehicle. As will be described, in the event that an accident involving an impact with a pedestrian should occur, gas will be supplied to drive the piston so that the piston rod 4 is driven upwardly out of the top of the cylinder 2 thus raising the hood or bonnet.

The housing 1 has an upstanding cylindrical side-wall 6 which surrounds a plenum chamber 7. A base 8 closes the lower part of the plenum chamber 7, and depending from the base is an apertured mounting lug 9 by means of which the housing may be secured firmly to the chassis of a motor vehicle. Extending radially from the side-wall 6 is a hollow spigot 10 and contained within the hollow spigot 10 is a pyrotechnic unit 11. The pyrotechnic unit 11 incorporates a charge of pyrotechnic material, and a squib with an associated squib resistor. The squib resistor is connected to receive a signal from a control unit 12. When a signal from the control unit 12 passes through the squib resistor, the squib resistor is heated, thus igniting the squib, the squib in turn igniting the pyrotechnic charge to generate gas. The gas will be directed from the pyrotechnic unit 11 into the plenum chamber 7.

The lower-most end of the tube 2 is received within the uppermost part of the side-wall 6 of the housing 1 and is secured in position appropriately. The upper end of the tube 2 is swaged inwardly 13, the inwardly swaged part supporting an annular seal 15 which engages the exterior of the piston rod 4 in a substantially sealing-tight manner.

The piston assembly 3 comprises the piston rod 4, the lowermost end of the piston rod 4 carrying an enlarged diameter piston head 16. An annular groove 17 is formed in the side-wall of the enlarged diameter piston head 16 and a resilient "O"-ring 18 is mounted in the groove 17 to provide a substantially sealing, substantially sliding fit between the piston head 16 and the inner wall of the cylinder 2. Located between the piston head 16, which is of enlarged diameter as compared with the main part of the piston rod 4, and that main part of the piston rod 4 is an intermediate section 19, the intermediate section 19 being of intermediate diameter, that is to say the intermediate section having a diameter greater than that of the piston rod 4, but less than that of the piston head 16.

An axially extending blind bore 20 is provided which extends upwardly from the lowermost face of the piston head 16, the bore extending through the piston head 16, through the intermediate section 19, and through part of the piston rod 4.

Two transverse bores are provided which communicate with the axially extending bore 20. A first transverse bore 21 extends radially inwardly from the side-wall of the intermediate section 19 located between the piston head 16 and the main part of the piston rod 4. A second radially extending bore 22 extends radially inwardly from the outer surface of the piston rod 4 at a position spaced slightly above the intermediate section 19. The second bore 22 has a diameter greater than the diameter of the first bore 21.

A slide valve element 23 is mounted on the piston rod 4 at a position above the piston head 16. The slide valve element is of annular form, and consists of a collar surrounding the piston shaft 4. The collar is a friction fit on the piston shaft 4, so that the collar initially holds itself in its position, that position being spaced slightly above the point where the radial bore 22 opens into the side-wall of the piston rod 4.

The axially extending bore 20 and the radially extending bores 21,22 provide a gas flow connection between the opposite sides of the piston head, the gas flow connection having a first predetermined gas flow resistance.

When the control unit generates a signal to actuate the pyrotechnic unit 11, gas will flow into the plenum chamber 7, thus increasing gas pressure within the plenum chamber 7 and causing the piston to begin to move upwardly. At that stage the gas pressure within the plenum chamber 7 P1 is greater than the gas pressure P2 within the uppermost region 24 of the cylinder 2 above the piston head. Consequently gas will flow through the axial bore 20 and through both the radial bores 2 and 22, from the plenum chamber 7 into the upper region 24. The force applied to the under-surface of the piston by the gas, which is equivalent to P1. A1, where A1 is the effective area of the piston exposed to the plenum chamber is greater than the combination of the force applied to the piston rod by the atmosphere and the force applied to the upper surface of the piston. The force applied by the gas to the upper-surface of the piston is P2. A2, where A2 is the effective area of the upper surface of the piston, which is less than the effective area of the lower surface of the piston as a consequence of the presence of the piston rod. The force applied to the piston rod which extends from the housing is P₀(A1-A2) where P₀ is atmospheric pressure. Because the force applied to the under-surface of the piston, tending to drive the piston upwardly is greater than the combination of the forces applied to the upper part of the piston and the piston rod then the piston will move upwardly.

The quantity of gas in the upper region 24 of the cylinder 2 will rise as more gas flows from the plenum 7 into the upper region 24. Also, as the piston moves upwardly, so the volume of the upper region 24 of the cylinder will become reduced, and the volume of the lower section of the cylinder which is in communication with the plenum chamber 7 increases. As the piston moves upwardly a situation is reached when P2, the pressure of the gas within the uppermost section 24 of the cylinder 2 is greater than the gas pressure P1, in the region beneath the piston head 16 and in the plenum chamber 7. When this situation obtains gas will begin to flow from the upper region 24, and into the lower region and plenum chamber 7, with the gas flowing through the radial bores 21 and 22 and through the axial bore 20. The gas flowing in this way will provide a damping effect for the upward movement of the piston. During the final stages of movement of the piston a situation is reached in which P2.A2, the force applied to the piston by the gas in the uppermost region 24 of the cylinder exceeds P1. A1, the force applied to the piston by the gas in the lowermost region of the cylinder, primarily by virtue of the fact that the gas pressure P2 in the uppermost region of the cylinder is much, much greater than the gas pressure P1 in the lowermost part of the cylinder. When this situation occurs the piston will continue to move upwardly due to inertia but a desired damping effect is given to the upward movement of the piston during the final stages of movement of the piston.

It is to be understood that if there was no gas flow through the piston the pressure P₂ would rise to a very high level, resulting in rebound, like a gas spring. The flow of gas through the piston in combination with the high pressure gas acting on the upper surface of the piston provides a desirable damping effect.

It is desirable for the final stages of the upward movement of the piston to be damped, because, as the piston reaches the final stages of its upward movement, the probability of there being an actual impact with the head of a pedestrian substantially increases. The beneficial effects of the invention would risk being negated if the hood or bonnet was moving upwardly very rapidly when impacted by the head of the pedestrian. Ideally the hood or bonnet should be stationary when struck by the head of the pedestrian.

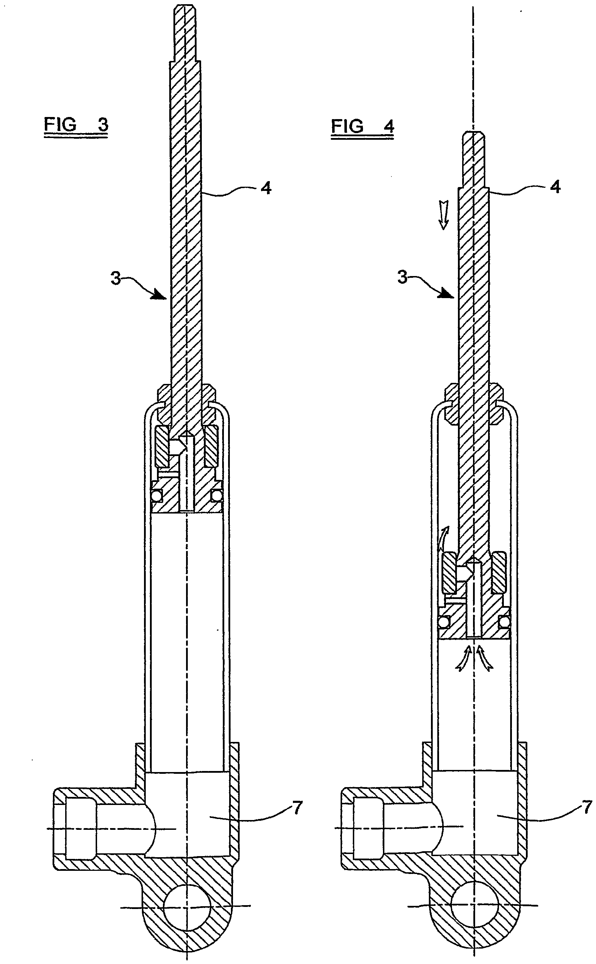

As the piston assembly 3 finally completes its upward stroke, as shown in Figure 3, the uppermost part of the sliding valve member 23 engages the under-surface of the annular seal carried by the inwardly swaged portion 13 of the cylinder 2. Thus upward movement of the slideable valve member 23 is prevented, whilst upward movement of the piston 3 continues. The lowermost part of the piston rod 4 thus slides frictionally through the slideable valve member 23, until the lowermost part of the slideable valve member 23 engages the step which exists at the junction between the intermediate section 19, provided between the piston head 16 and the piston rod 4, and the piston rod 4 itself. As can be seen from Figure 3 when the slideable valve member is in this position the upper radial bore 22 is sealed, while the lower radial bore 21 remains open.

Thus, when the slideable valve member 23 has moved from its initial or first position to its second position, in which it seals the bore 22, the gas flow connection between the opposite sides of the piston head will have a different, greater gas flow resistance than when the slideable valve member 23 is in its initial position.

As mentioned above, the radial bore 22 has a large cross-sectional area, and thus a greater capacity for gas flow than the lower radial bore 21. It is to be understood that the gas flow path between the upper region 24 of the cylinder 2 and the lower region, which communicates with the plenum chamber 7, has the gas flow resistance thereof increased in response to the piston reaching the termination of its upward stroke.

As the piston 3 moves downwardly, from the position shown in Figure 3, for example as a consequence of the hood or bonnet 5 being struck by a pedestrian, the downward movement is damped by the flow of gas from the lower region of the cylinder and the plenum chamber 7 through the axial bore and the single radial bore 21 into the upper region 24 of the cylinder. Because the available gas flow path only has a very small cross-sectional area over part of its length, that cross-sectional area being the cross-sectional area of the radial bore 21, the movement of the piston is damped to a substantial extent, and an appropriate energy absorbing characteristic is provided.

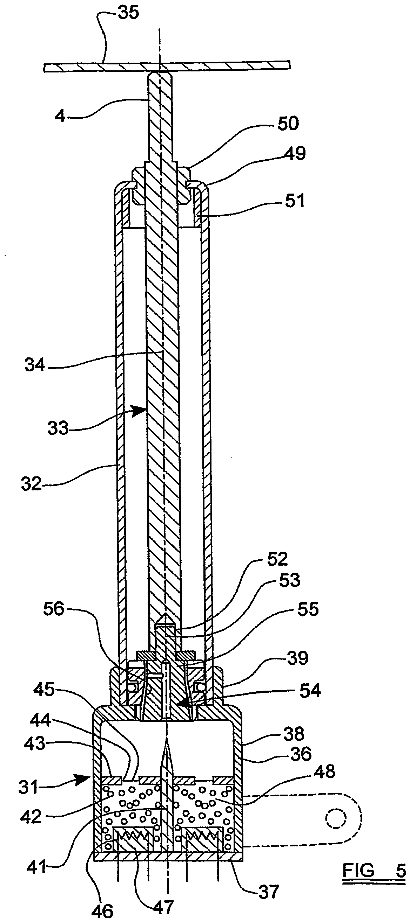

Turning now to Figures 5 to 14, a second embodiment of a safety device in the form of a hood or bonnet-lifter is illustrated, the hood or bonnet-lifter comprising a lower housing 31. Extending upwardly from the lower housing 31 is a cylinder 32 and contained within the cylinder 32 is a piston assembly 33. Part of the piston rod 34 of the piston assembly 33 extends above the cylinder 32 to engage part of a hood or bonnet 35. As will be described, upon actuation of the device, the piston is driven upwardly through the cylinder 32, thus causing the hood or bonnet 35 to be raised.

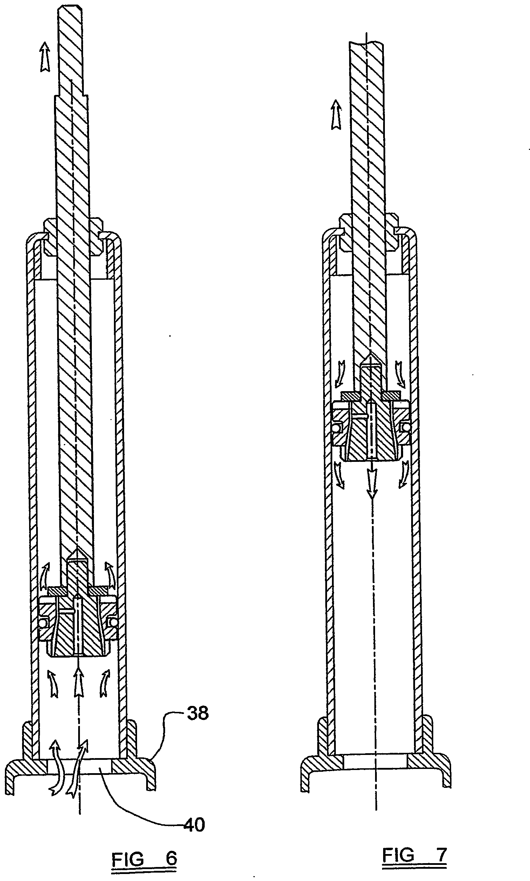

The housing 31 is of cylindrical form, having a cylindrical side-wall 36, closed at its lower end by a base 37 and having an upper wall 38. The side-wall 36 or base 37 may be provided with a mounting lug (shown in phantom in Figure 5) to secure the housing to the chassis of a vehicle. The upper wall 38 carries a circular upwardly directed flange 39 which surrounds an aperture 40 which is formed in the upper wall 38 (see Figure 6).

The interior of the housing 31 is divided into a plurality of chambers. In the described embodiment the interior of the housing is divided into two chambers by a central partition 41 which extends upwardly from the base 37. The partition 41 extends towards the aperture 40, but terminates a short distance from the aperture 40. The first chamber 42 contains a pyrotechnic material which is retained in place by an upper retainer wall 43 which extends from the wall 36 of the housing 31 to the partition 40, the retainer wall 43 defining an aperture 44 therein, the aperture 44 initially being sealed by means of a rupturable foil 45.

Within the chamber 41, mounted on the base 37 of the housing, is a pyrotechnic squib 46, the pyrotechnic squib 46 containing a squib resistor 47.

At this stage it is to be understood that if an appropriate electric signal is passed through the squib resistor 47, heat will be generated, thus igniting the squib 46 and the ignited squib 46 will ignite the pyrotechnic material 42 thus generating hot gas, which will rupture the foil 41, and flow into the upper part of the housing 31 to act on the piston assembly 33 to drive the piston upwardly.

It is to be appreciated that the second chamber 48, which is located on the far side of the partition from the chamber 41, contains a similar pyrotechnic material and igniting squib.

The lower-most end of the cylinder 32 is received as a sealing fit within the upstanding flange 39 provided on the upper wall 38 of the housing 31. The upper end of the cylinder 32 is inwardly swaged 49, the inward swaging carrying a sealing ring 50, the sealing ring 50 effecting a sliding sealing fit against the main part of the piston rod 34. The cylinder 32 is provided with an internal collar 51 provided adjacent the inwardly swaged region 49. The collar 51 serves to reduce the interior diameter of the cylinder 32 for a purpose that will become clear during the following description.

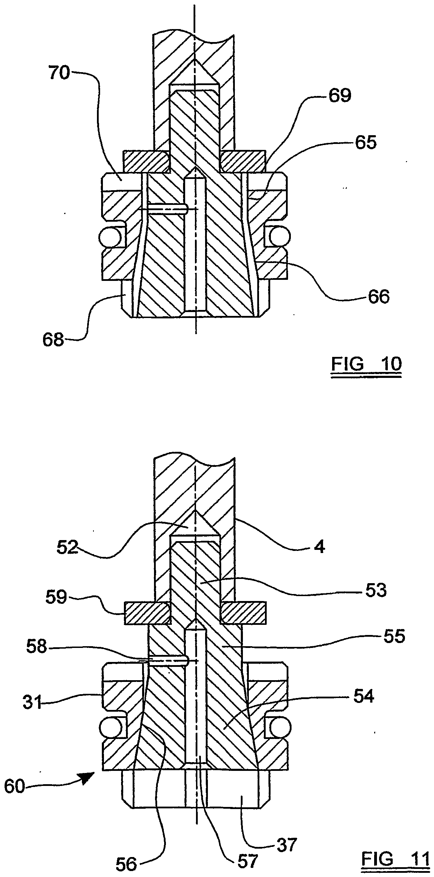

The piston assembly 33 comprises the piston rod 34, which, as has been mentioned, extends upwardly beyond the end of the cylinder 32 to engage with the hood (or bonnet) 35. The lower end of the piston rod 34 carries a piston head assembly which is shown in greater detail in Figures 11 to 13.

The lower-most end of the piston rod 34 is provided with an axially extending internal blind bore 52. The blind bore receives and retains a mounting peg 53 which is formed on a piston head element 54. The peg 53 extends upwardly from the main body of the piston head element 54, the main body having a region 55 of a first uniform diameter, which is greater than the diameter of the peg 53, adjacent the base of the peg, and, beneath the region 55, a second region 56 of diverging form, in which the diameter of the body gradually increases. Formed within the body of the piston head element 54 is a gas flow passage, the gas flow passage comprising an axially upwardly extending portion 57 which extends upwardly from the base of the increasing diameter portion 56 of the piston head element 54, and a transverse bore 58 which emerges from the side-wall of the body in the region 55 of uniform diameter.

A flat washer-like stop element 59 is provided which is received on the mounting peg 53, and which rests on the shoulder that is created between the mounting peg 53 and the body portion 55 of uniform diameter, the stop element 59 being trapped between the lower-most end of the piston rod 34 and the piston head element 54. The stop element 59 protrudes radially outwardly beyond the piston rod 34. The stop element 59 is dimensioned to be received within the collar 51 provided at the top of the cylinder 32.

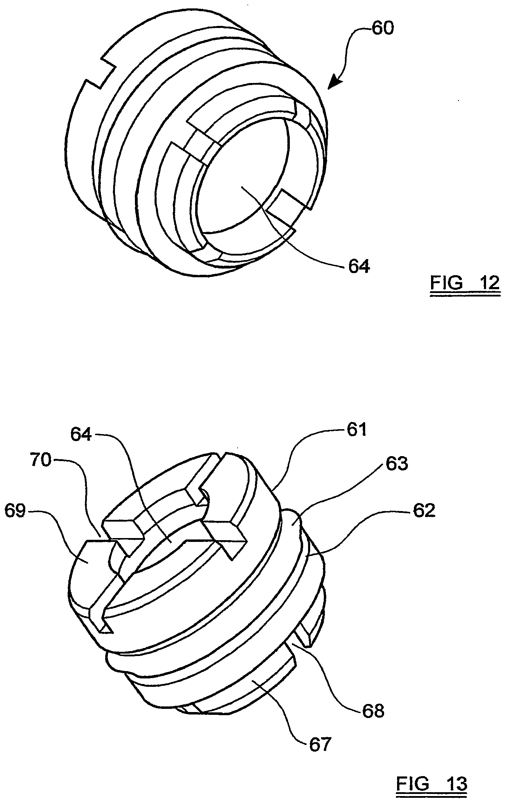

Slidably mounted on the piston head element 54 is a sleeve valve member 60, shown in Figures 12 and 13. The sleeve valve member 60 has a cylindrical body portion 61 which has a uniform exterior diameter. Formed in the outer wall of the body is an encircling groove 62 and received within the groove 62 is a resilient "O"-ring 63 which acts as a sealing ring to seal against the interior wall of the cylinder 32 with a sealing sliding fit.

An axial bore 64 extends through the body 61. The bore 64 has an initial upper portion 65 of uniform diameter and a lower portion 66 of diverging form, thus having an increasing diameter. As will become clear, the form of the portion of the bore of increasing diameter, 66, corresponds with the form of the portion 56 of the piston head element of increasing diameter.

Extending from the lower-most part of the body 61 are four arcuate resilient fingers 67 which are equi-spaced about the bore 64, the inner surfaces being contiguous with the bore, the fingers 67 being spaced apart by gaps 68. The fingers do not extend radially outwardly as far as the outer wall of the body.

Formed in the flat upper face 69 of the body 61 are four radially directed slots 70 which each extend from the bore 64 to the outer periphery of the cylindrical body 61.

When the safety device is in an initial condition, the sleeve valve member 60 is mounted on the piston head element 54. The flat upper surface 69 is in engagement with the under-surface of the washer-like stop 59. The fingers 67 resiliently grip the lower-most part of the piston head element 54 to retain the sleeve valve member 60 in the initial position. As can be seen from Figure 6, when the sleeve valve member is in the described position, two gas flow paths exist from the underside of the piston head assembly to the upper side of the piston head assembly. The first gas flow path is through the gaps 68 between the fingers 67, up between the spaced-apart portions of the sleeve valve member and the piston head element 54 which are of increasing diameter, that is to say the portion 66 of the sleeve valve member 60 and the portion 56 of the piston head element 54 and then radially outwardly through the four radially directed slots or channels 70. The second gas flow path extends through the axial bore 57 provided in the piston head element 54 and the radial gas flow passage 58, the gas flow path then again extending through the radially outwardly directed slots or channels 70. The first gas flow path has a larger effective cross-section than the second gas flow path, and thus the rate of flow of gas through the first gas flow path will be greater than the flow of gas through the second gas flow path.

The combination of the first gas flow path and the second gas flow path, when the sleeve valve member 60 is in its initial position, forms a gas flow connection between the opposite sides of the piston, the gas flow connection having a predetermined gas flow resistance.

Initially the piston is located at the lower-most part of the cylinder 32, with the lower-most part of the piston head element 54 and the fingers 67 of the sleeve valve member 60 being received within the aperture 40 formed in the upper wall 38 of the housing 31.

When the safety device is to be operated an electric current is passed through the squib resistor 47 of the squib 46 present in the first chamber 42. The pyrotechnic material is ignited and the foil 45 ruptures. Gas flows through the aperture 44, and fills the upper part of the housing 31, thus applying gas pressure to the under-surface of the piston head element 54. The partition 41 acts to direct the flow of gas upwardly, and minimises the risk that the hot gas will ignite the pyrotechnic charge in the second chamber 48.

The pressurised gas causes the piston head element to start moving upwardly, thus moving the piston rod 34 upwardly and thus moving part of the bonnet (or hood) 35 upwardly. As the piston moves upwardly (see Figure 6) gas from the pyrotechnic charge will fill the lower region 71 within the cylinder 32 beneath the piston head assembly, and that will tend to drive the piston upwardly. Some gas, however, will flow through the two described gas flow paths into the upper region 72 within the cylinder 32 above the piston head assembly. The gas cannot escape from this region because of the seal 50 provided at the upper part of the cylinder.

In the initial stage of operation of the safety device the gas pressure P1 within the lower region 71 is greater than the gas pressure P2 within the upper region 72 and thus, even as the piston is moving upwardly, the gas will tend to flow from the lower region 71 to the upper region 72. The force applied to the piston by the gas in the region 71 is effectively P1 . A1, where P1 is the gas pressure within the region 71 and A1 is the total effective area of the piston head assembly acted on by the gas. On the other hand, the force applied to the piston head assembly by the gas within the region 72 is P2. A2 wherein P2 is the gas pressure within the region 72 and A2 is the effective area of the piston head assembly acted on by the gas in the region 72. The effective area A2 is, of course, less than the effective area A1 by virtue of the presence of the piston rod 34 within the upper region 72. The force applied to the piston rod by the atmosphere is P₀(A1-A2).

Whenever P1. A1 is greater than P2. A2 + P₀(A1-A2) the piston is accelerated upwardly.

As the piston begins to reach the termination of its upward stroke, the pressure P2 within the region 72 will increase. When P2, the pressure within the region 72, exceeds the pressure P1 within the region 71, gas will begin to flow from the upper region 72 to the lower region 71. The piston will continue to move upwardly due to inertia and gas in the upper region 72 it will become more compressed and a situation will obtain in which P2.A2 P₀(A1-A2) is greater than P1. A1, and thus the effective downward force applied to the piston by the gas in the upper region 72 and by atmospheric pressure will be greater than the force applied by the gas in the lower region 71, and consequently upward movement of the piston will then begin to be retarded or damped. This provides an ideal operating characteristic for a safety device such as a bonnet (or hood) lifter as presently being described.

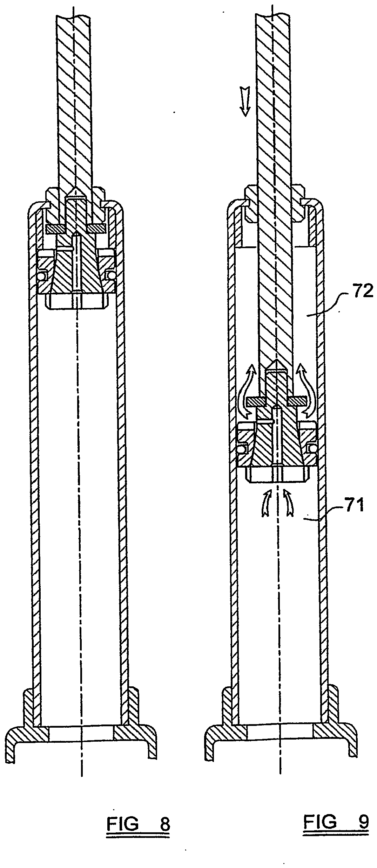

As the piston approaches the very end of its stroke, as shown in Figure 8, initially the upper surface 69 of the sleeve valve member 60 is engaged by an abutment formed by the lower end of the collar 51 provided at the top of the cylinder 32. The sleeve valve member 60 is thus prevented from moving upwardly, whilst the piston head element 54 continues to move upwardly. The annular washer-like stop element 59 enters into the collar 51 and then engages the under-surface of the seal 50 carried by the inwardly swaged region 49 of the cylinder 32, to prevent further upward movement of the piston. The fingers 67 carried by the sleeve valve member 60 flex outwardly slightly as the sleeve valve member effectively moves downwardly relative to the piston head element 54 so that the sleeve valve member then has the condition illustrated in Figure 11 in which the two portions of increasing diameter (that is to say the portion 66 of increasing diameter of the sleeve valve member and the portion 56 of increasing diameter of the piston head element 54) are in close abutment, thus effectively closing the first gas flow path which originally extended between these two regions. Thus, as can be seen in Figure 11, only one gas flow path, the second gas flow path, now remains open, that being the gas flow path through the axial bore 57 and the radial bore 58, which is a gas flow path dimensioned to allow only a relatively small flow of gas. Thus the gas flow connection between the lower region 41 and the upper region 72 has the flow resistance thereof increased in response to the piston reaching the termination of its upward stroke and the sleeve valve element 60 moving to a second position.

The sleeve valve element 60 is retained frictionally in its new position.

If the hood of the motor vehicle is struck by a pedestrian, a substantial downward force may be applied to the piston rod 34 tending to drive the piston head assembly downwardly. As the piston head assembly moves downwardly gas pressure P1 in the region 71 will increase. This will cause gas to flow from the region 71 to the region 72 as shown in Figure 9 provided that P1, the pressure in the region 71 is greater than P2, the gas pressure in the region 72. The gas will only flow through the single gas flow path constituted by the bores 57 and 58, thus giving a high degree of energy absorption, which is desired.

Regardless of whether the hood is or is not struck by a pedestrian, after operation of the safety device in the manner described, the hood may be reclosed, thus driving the piston assembly 33 back to the initial position as shown in Figure 5. As the piston head assembly is moved downwardly, initially the fingers 67 provided on the sleeve valve member will pass into the aperture 40, and the under-surface of the body 61 of the sleeve valve member 60, which is spaced radially outwardly from the fingers 67, will engage the upper plate 38 of the housing 31 in the region immediately surrounding the aperture 40. The sleeve valve member 60 will thus be prevented from moving downwardly, whilst the piston rod 34 may move downwardly by a further limited extent, thus moving the piston head element 54 downwardly relative to the sleeve valve member until the under-surface of the annular washer-like stop element 59 comes into contact with the upper surface 69 of the body 61 of the sleeve valve member 60. The apparatus is now again in the initial condition as illustrated in Figure 5, with the exception that the first pyrotechnic charge in chamber 41 has been ignited. However, it is to be appreciated that should a further accident situation or potential accident situation arise, the second pyrotechnic charge present in the chamber 48 may be ignited, when the above-described cycle of operation will be repeated. Thus the device may effect repeated operations without receiving any attention from a skilled mechanic, and without replacing any pyrotechnic charges.

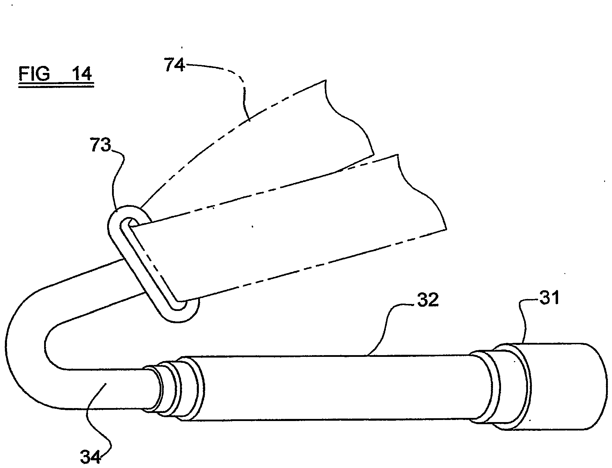

Figure 14 illustrates an alternative form of safety device which incorporates a housing 31, and a cylinder 32 of the form described with reference to Figure 5 which contains a piston assembly as described with reference to Figures 5 to 13. In this embodiment the piston rod 34 is connected a guide loop 73 through which part of a safety-belt 74 passes. It is to be understood that, upon actuation of the device, the piston rod 34 will extend from the cylinder 32, thus increasing the tension present in the safety-belt 74. The safety device is consequently operable as a safety-belt pretensioner.

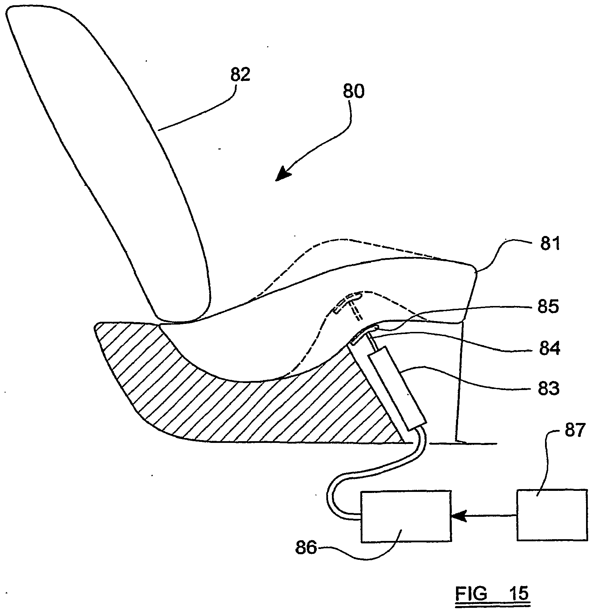

Figure 15 illustrates a further safety device incorporating a piston and cylinder unit of the type described primarily with reference to Figures 5 to 13. Figure 15 illustrates a vehicle seat 80 which may be a rear seat. The vehicle seat is provided with a squab 81 and a back-rest 82. A piston and cylinder unit 83 of the type described with reference to Figures 5 to 13 is mounted beneath the squab of the seat, the piston and cylinder arrangement being located on a rearwardly inclined axis, the piston rod 84 emerging from the uppermost part of the cylinder and carrying a plate 85 which engages the undermost part of the squab 81 of the seat. The piston and cylinder unit 83 is connected to a control unit 86, the control unit 86 being connected to receive signals from an appropriate crash sensor 87. It is to be appreciated that in the event that the crash sensor 87 senses a crash and passes an appropriate signal to the control unit 86, the piston and cylinder unit 83 will be actuated thus moving the plate 85 upwardly and deforming the squab 81 of the seat upwardly. The deformation of the squab of the seat will tend to resist any forward movement of the pelvis of a seat occupant. If the pelvis does begin to move forwardly, that movement of the pelvis will tend to drive the plate 85 downwardly thus driving piston rod 84 back into the cylinder, and if this happens energy will be absorbed as the piston head moves downwardly with gas flowing through the flow path past the piston head.

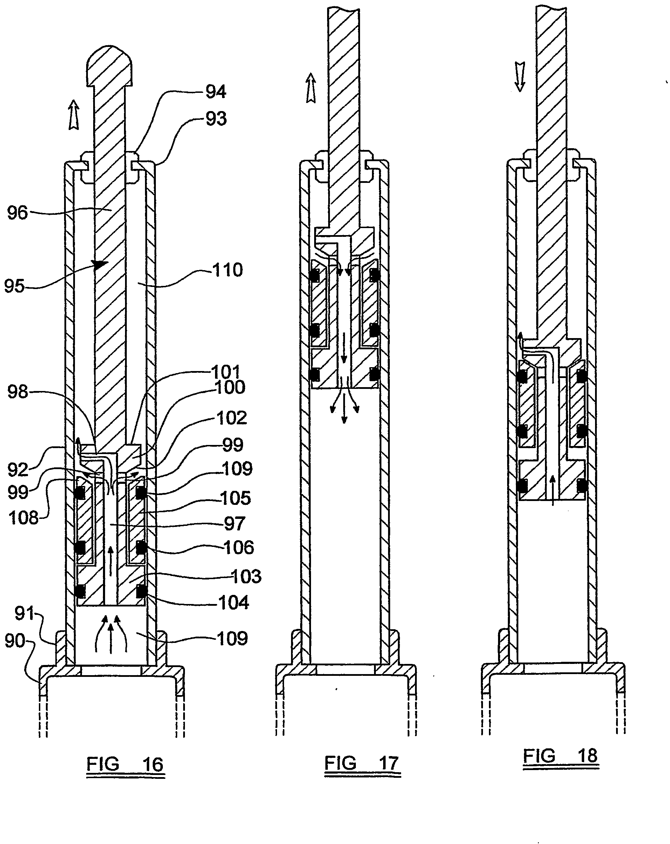

Figures 16 to 18 illustrate a further form of piston-and-cylinder that can be used in a safety device equivalent to the safety devices described above. In the described embodiment there is, as in the previous embodiments, a cylinder which contains a piston, the piston being associated with a moveable slide-valve which, when moved from a first position to a second position can increase the gas flow resistance of a gas flow path which extends across the piston head.

Referring initially to Figure 16, part of a housing 90 is illustrated. The housing 90 incorporates a plenum chamber provided to receive gas from one or more pyrotechnic units as in the previously described embodiments. The upper part of the housing defines an upwardly extending flange 91 which surrounds and engages the lowermost part of a cylinder 92. The uppermost part of the cylinder is swaged inwardly 93, the inwardly swaged portion of the cylinder being provided with a seal 94. A piston 95 is mounted within the cylinder, the piston rod 96 of the piston emerging from the cylinder through the seal 94.

The lowermost end of the piston rod 96 is provided with an axially extending bore 97. The axially extending bore is provided with a first radially extending bore 98, and also a pair of diametrically opposed radially extending bores 99.

The radially extending bore 98 is aligned with a radially enlarged portion 100 of the piston rod 96. The radially large portion has an upper face 101 which extends perpendicularly to the axis of the piston rod 96, and a lower face 102 which is inclined relative to the axis of the piston rod 96. The radially enlarged portion 100 has a radius which is less than the radius of the cylinder 92, so that the side wall of the radially enlarged portion 100 is spaced from the inner wall of the cylinder 92.

The first radially extending bore 98 emerges from the side wall of the radially enlarged potion 100, in a side wall thereof between the upper face 101 and the lower face 102.

The pair of opposed bores 99 extend, from the piston rod, at a point immediately beneath the radially enlarged portion 100.

The lowermost end of the piston rod is provided with a piston head 103, the piston head being provided with a "O" ring seal 104.

Between the upper surface of the piston head 103 and the lower face 102 of the radially enlarged portion 100 there is provided a sleeve valve 105. The sleeve valve 105 is in the form of a tubular element which surrounds the part of the piston rod 96 between the radially enlarged portion 100 and the piston head 103. The sleeve valve 105 is slideable relative to the piston. The sleeve valve 105 is provided with two spaced apart "O" ring seals 106,107. Provided at axially spaced positions to engage frictionally (but slideably) with the interior of the cylinder 91. The uppermost part of the sleeve valve 105 is provided with a frustoconical face 108 which substantially conforms to the inclined face 102 provided on the radially large portion 100 of the piston rod 95.

The length of the sleeve valve 105 is such that, when the piston-and-cylinder unit is in an initial condition, in which the sleeve valve abuts against the uppermost surface of the piston head 103, the upper part of the sleeve valve 105 thus exposes the two diametrically opposed radial bores 99, with the upper face 108 of the sleeve valve being spaced from the inclined face 102 on the piston rod.

It is to be appreciated that with the piston-and-cylinder in the first condition the axially extending bore 97 together with the radial bore 98 and also the diametrically opposed radial bores 99 form a gas flow connection between a region 109 of the cylinder located beneath the piston and a further region 110 within the cylinder located above the piston. The gas flow communication has a predetermined resistance to gas flow.

As in the previously described embodiments, when gas is supplied to the plenum chamber within the housing 90, the gas will flow into the region 109 of the cylinder 92 which is located beneath the piston. The gas will tend to cause the piston to rise within the cylinder, but some gas will flow through the bore 97 and the associated bores 98 and 99 into the upper region 110 within the cylinder. As the piston moves upwardly, so the sleeve valve 105 tends to be brought into firm engagement with the upper surface of the piston head 103 as a consequence of the frictional engagement between the "O" rings 106 and 107 present on the sleeve valve 105 and the interior wall of the cylinder 92. Thus the diametrically opposed radially extending bores 99 are maintained in an unobstructed state as the piston rises.

As in the previously described embodiments, as the piston begins to approach the end of its upward stroke, when gas pressure within the upper region 110 has risen substantially, gas will flow from the upper region 110 into the lower region 109 through the radially extending bores 98 and 99 and the axially extending bores 97. Thus, as in the previously described embodiment, whilst the piston may continue to move upwardly due to inertia, that upward movement will be damped as the piston begins to reach the end of its stroke.

If the piston begins to move downwardly, for example if the piston-and-cylinder unit is provided within a bonnet or hood lifter, and a pedestrian impacts with the bonnet whilst it is in a lifted condition, the piston head will move downwardly, but the sleeve valve 105, as a consequence of the frictional engagement of the "O" rings 106 and 107 with the interior wall of the cylinder 92, will initially remain stationery until the inclined face 102 on the radially enlarged portion 100 of the cylinder rod 95 engages the frustoconical face 108 provided at the top of the sleeve valve 105. The engagement of the inclined face 102 and the frustoconical end portion 108 forms a substantially gas-tight or almost gas-tight seal. Thus the diametrically opposed radially extending bores 99 are sealed, and the gas flow communication between the two regions 109, 110 within the cylinder is defined solely by the axially extending bore 97 and the single radially extending bore 98. Thus the flow resistance of the gas flow path has been reduced. As the piston continues to move downwardly the upper part of the sleeve valve will remain in firm engagement with the inclined face 102 of the radially enlarged portion 100 of the piston rod 95. Thus a desired damping effect is provided as the piston is moved downwardly.

It is to be appreciated that at the end of the downward stroke the sleeve valve will remain in the position illustrated in Figure 18 relative to the piston head 103. However, should the housing 90 be a housing which contains multiple pyrotechnic units, if a subsequent pyrotechnic unit is actuated, the piston head will be caused to move upwardly, with the sleeve valve remaining stationary, until the upper part of the piston head 103 engages the lowermost part of the sleeve valve 105. This, of course, is the condition of the piston-and-cylinder unit as shown in Figure 16.

When used in this specification and claims, the terms "comprises" and "comprising" and variations thereof mean that the specified features, steps or integers are included. The terms are not to be interpreted to exclude the presence of other features, steps or components.

## Claims

1. A vehicle safety device, the vehicle safety device incorporating a piston and cylinder unit (3), the piston (4) being moveable relative to the cylinder (2), the cylinder (2) being divided into first (7) and second (24) internal regions by the piston (4), there being a gas flow connection (20,21,22) between the regions, the piston (4) being provided with a moveable element (23), the moveable element (23) being moveable from a first position in which the gas flow connection provides a first gas flow resistance to a second position in which the gas flow connection provides a second gas flow resistance, wherein the flow resistance of the gas flow connection is changed in response to the piston (4) reaching a predetermined position relative to the cylinder (2) when the piston (4) is being driven out of the cylinder (2), the changed flow resistance being maintained when the piston (4) subsequently moves back into the cylinder (2), **characterised in that** the flow connection comprises two gas flow paths (21,22), and wherein the element (23), when in the second position, obstructs one of said two gas flow paths (22).

2. A safety device according to Claim 1 wherein the gas flow connection comprises a combination of passages extending through a head assembly (16) of the piston (4), the passages defining a first gas flow path (21) having a first minimum cross-sectional area and a second gas flow path (22) having a second minimum cross-sectional area, greater than the first minimum cross-sectional area.

3. A safety device according to Claim 2 wherein the element (23), when in the second position, obstructs the second gas flow path (22).

4. A safety device according to any preceding Claim, wherein the element (23) is a slide valve element, the slide valve element (23) being slideable relative to the rest of the piston (4), the slide valve element (23) being moveable in response to engagement with an abutment (15) formed within the cylinder (2).

5. A safety device according to Claim 4 wherein the gas flow connection comprises a bore (20) extending axially from the end face of the piston (4) through the piston head (16) to the piston rod, there being two transverse bores (21 ,22) extending from the axial bore (20) to the side-face of the piston, the slide valve element (23) being moveable to a second position in which it closes one of the apertures (22) extending to the side-face of the piston (4).

6. A safety device according to Claim 4 wherein the flow connection comprises a passage (57) extending from an end face of the piston (33) towards the piston rod (34), in combination with a further passage (58) extending to a side-face of the piston assembly forming a first flow path and an annular flow passage surrounding part of the piston head (54) between the piston head (54) and the slide valve member (60) forming a second flow path, the slide valve member (60) being moveable from the initial position in which the passage surrounding the piston head (54) is open to a second position in which the passage surrounding the piston head (54) is closed.

7. A safety device according to Claim 6, wherein the piston head (54) has a portion (56) of increasing diameter and the slide valve (60), which surrounds the piston head (54), has a bore (64) with a corresponding portion (66) of increasing diameter.

8. A safety device according to any preceding claim, wherein the moveable element (60) is engageable with part (38) of the cylinder (32) to reset the element (60) to its initial position when the piston (33) is returned to its initial position.

9. A safety device according to any one of claims 1 to 3 wherein the element is a slide valve element (23), which is slideable relative to the rest of the piston, the slide valve element (23) surrounding part of the piston rod (4), the slide valve element (23) being movable towards the first position, relative to the piston, as a consequence of the piston moving in one direction, and being moveable to a second position, relative to the piston, as consequence of the piston moving in the opposite direction.

10. A safety device according to Claim 9 wherein the gas flow connection comprises a bore (20) extending from the end face of the piston through the piston head (16) to the piston rod (4), there being axially spaced apart transverse bores (21,22) extending from the axial bore (20) to the side of the piston, the slide valve element (23), when in its second position, closing at least one of the axially spaced bores (22).

11. A safety device according to Claim 9 wherein the slide valve element (23) surrounds part of the piston rod (4) extending between the head (16) of the piston and a radially enlarged portion (19) of the piston rod (4), the said at least one of the axially spaced bores (22) which is closed by the slide valve element (23) opening at a position between the radially enlarged portion (19) and the piston head (16).

12. A safety device according to any one of the preceding Claims wherein a mount (9) is provided to fix the cylinder to the chassis of the vehicle.

13. A safety device according to any one of the preceding Claims wherein the cylinder is provided with a source of gas configured to be activated in response to a signal.

14. A safety device according to Claim 13 wherein the source of gas comprises a pyrotechnic charge (42), the pyrotechnic charge being provided with an actuating squib (46) to ignite the charge in response to an electric signal.

15. A safety device according to Claim 12 or 13 wherein there are a plurality of sources of gas (42,48) prepared for successive activation.

16. A safety device according to any one of the preceding Claims in the form of a hood or bonnet-lifter.

17. A safety device according to any one of Claims 1 to 12 in the form of a belt pretensioner.

18. A safety device according to any one of Claims 1 to 12 in the form of a pelvis restraint, the piston and cylinder (53) being located to raise the central part of a seat cushion (81) when the safety device is operated.

## Patentansprüche

1. Fahrzeugsicherheitsvorrichtung, wobei die Fahrzeugsicherheitsvorrichtung eine Kolben- und Zylindereinheit (3) beinhaltet, der Kolben (4) relativ zum Zylinder (2) bewegbar ist, der Zylinder (2) durch den Kolben (4) in einen ersten (7) und zweiten (24) Innenbereich aufgeteilt ist, eine Gasströmungsverbindung (20, 21, 22) zwischen den Bereichen vorhanden ist, der Kolben (4) mit einem beweglichen Element (23) versehen ist, das bewegliche Element (23) von einer ersten Position, in der die Gasströmungsverbindung einen ersten Gasströmungswiderstand vorsieht, zu einer zweiten Position, in der die Gasströmungsverbindung einen zweiten Gasströmungswiderstand vorsieht, bewegbar ist, wobei der Strömungswiderstand der Gasströmungsverbindung als Reaktion darauf geändert wird, dass der Kolben (4) eine vorgegebene Position relativ zum Zylinder (2) erreicht, wenn der Kolben (4) aus dem Zylinder (2) getrieben wird, wobei der geänderte Strömungswiderstand aufrechterhalten wird, wenn sich der Kolben (4) anschließend in den Zylinder (2) zurückbewegt, **dadurch gekennzeichnet, dass** die Strömungsverbindung zwei Gasströmungswege (21, 22) umfasst und wobei das Element (23), wenn es in der zweiten Position ist, einen der zwei Gasströmungswege (22) blockiert.

2. Sicherheitsvorrichtung nach Anspruch 1, wobei die Gasströmungsverbindung eine Kombination von Durchgängen umfasst, die durch eine Kopfanordnung (16) des Kolbens (4) verlaufen, wobei die Durchgänge einen ersten Gasströmungsweg (21) mit einer ersten minimalen Querschnittsfläche und einen zweiten Gasströmungsweg (22) mit einer zweiten minimalen Querschnittsfläche, die größer als die erste Querschnittsfläche ist, begrenzen.

3. Sicherheitsvorrichtung nach Anspruch 2, wobei das Element (23), wenn es in der zweiten Position ist, den zweiten Gasströmungsweg (22) blockiert.

4. Sicherheitsvorrichtung nach irgendeinem vorhergehenden Anspruch, wobei das Element (23) ein Schieberventilelement ist, wobei das Schieberventilelement (23) relativ zum Rest des Kolbens (4) verschiebbar ist und das Schieberventilelement (23) als Reaktion auf den Eingriff mit einem Widerlager (15), das im Zylinder (2) ausgebildet ist, bewegbar ist.

5. Sicherheitsvorrichtung nach Anspruch 4, wobei die Gasströmungsverbindung eine Bohrung (20) umfasst, die axial von der Endfläche des Kolbens (4) durch den Kolbenkopf (16) zur Kolbenstange verläuft, wobei zwei Querbohrungen (21, 22) von der axialen Bohrung (20) zur Seitenfläche des Kolbens verlaufen und das Schieberventilelement (23) zu einer zweiten Position bewegbar ist, in der es eine der Öffnungen (22) schließt, die zur Seitenfläche des Kolbens (4) verlaufen.

6. Sicherheitsvorrichtung nach Anspruch 4, wobei die Strömungsverbindung einen Durchgang (57), der von einer Endfläche des Kolbens (33) zur Kolbenstange (34) verläuft, in Kombination mit einem weiteren Durchgang (58), der zu einer Seitenfläche der Kolbenanordnung verläuft, die einen ersten Strömungsweg bildet, und einem ringförmigen Strömungsdurchgang umfasst, der einen Teil des Kolbenkopfs (54) zwischen dem Kolbenkopf (54) und dem Schieberventilelement (60) umgibt, das einen zweiten Strömungsweg bildet, wobei das Schieberventilelement (60) von der Anfangsposition, in welcher der den Kolbenkopf (54) umgebende Durchgang offen ist, zu einer zweiten Position bewegt werden kann, in welcher der den Kolbenkopf (54) umgebende Durchgang geschlossen ist.

7. Sicherheitsvorrichtung nach Anspruch 6, wobei der Kolbenkopf (54) einen Abschnitt (56) von zunehmendem Durchmesser hat und das Schieberventil (60), das den Kolbenkopf (54) umgibt, eine Bohrung (64) mit einem entsprechenden Abschnitt (66) von zunehmendem Durchmesser hat.

8. Sicherheitsvorrichtung nach irgendeinem vorhergehenden Anspruch, wobei das bewegliche Element (60) mit einem Teil (38) des Zylinders (32) in Eingriff bringbar ist, um das Element (60) in seine Anfangsposition zurückzusetzen, wenn der Kolben (33) in seine Anfangsposition zurückgebracht wird.

9. Sicherheitsvorrichtung nach irgendeinem der Ansprüche 1 bis 3, wobei das Element ein Schieberventilelement (23) ist, das relativ zum Rest des Kolbens verschiebbar ist, das Schieberventilelement (23) einen Teil der Kolbenstange (4) umgibt, das Schieberventilelement (23) zur ersten Position, relativ zum Kolben, als Folge dessen, dass sich der Kolben in eine Richtung bewegt, bewegbar ist, und in eine zweite Position, relativ zum Kolben, als Folge dessen, dass sich der Kolben in die entgegengesetzte Richtung bewegt, bewegbar ist.

10. Sicherheitsvorrichtung nach Anspruch 9, wobei die Gasströmungsverbindung eine Bohrung (20) umfasst, die von der Endfläche des Kolbens durch den Kolbenkopf (16) zur Kolbenstange (4) verläuft, wobei dort axial beabstandete Querbohrungen (21, 22) vorhanden sind, die von der axialen Bohrung (20) zur Seite des Kolbens verlaufen, wobei das Schieberventilelement (23), wenn es in seiner zweiten Position ist, zumindest eine der axial beabstandeten Bohrungen (22) verschließt.

11. Sicherheitsvorrichtung nach Anspruch 9, wobei das Schieberventilelement (23) einen Teil der Kolbenstange (4) umgibt, die zwischen dem Kopf (16) des Kolbens und einem radial vergrößerten Abschnitt (19) der Kolbenstange (4) verläuft, wobei sich die zumindest eine der axial beabstandeten Bohrungen (22), die durch das Schieberventilelement (23) verschlossen wird, an einer Position zwischen dem radial vergrößerten Abschnitt (19) und dem Kolbenkopf (16) öffnet.

12. Sicherheitsvorrichtung nach irgendeinem der vorhergehenden Ansprüche, wobei eine Halterung (9) vorgesehen ist, um den Zylinder am Chassis des Fahrzeugs zu befestigen.

13. Sicherheitsvorrichtung nach irgendeinem der vorhergehenden Ansprüche, wobei der Zylinder mit einer Gasquelle versehen ist, die dazu konfiguriert ist, als Reaktion auf ein Signal aktiviert zu werden.

14. Sicherheitsvorrichtung nach Anspruch 13, wobei die Gasquelle eine pyrotechnische Ladung (42) umfasst, wobei die pyrotechnische Ladung mit einem Betätigungszünder (46) versehen ist, um die Ladung als Reaktion auf ein elektrisches Signal zu zünden.

15. Sicherheitsvorrichtung nach Anspruch 12 oder 13, wobei mehrere Gasquellen (42, 48) vorhanden sind, die für eine aufeinanderfolgende Aktivierung vorbereitet sind.

16. Sicherheitsvorrichtung nach irgendeinem der vorhergehenden Ansprüche in Form eines Kühler- oder Motorhaubenhebers.

17. Sicherheitsvorrichtung nach irgendeinem der Ansprüche 1 bis 12 in Form eines Gurtstraffers.

18. Sicherheitsvorrichtung nach irgendeinem der Ansprüche 1 bis 12 in Form eines Beckengurts, wobei der Kolben und Zylinder (53) dazu positioniert sind, das Mittelteil eines Sitzpolsters (81) anzuheben, wenn die Sicherheitsvorrichtung betätigt wird.

## Revendications

1. Un dispositif de sécurité de véhicule, comprenant un piston et un cylindre (3), le piston (4) étant mobile par rapport au cylindre (2), le cylindre (2) étant divisé en une première (7) et une deuxième (24) zones internes par le piston (4), un raccord de circulation des gaz (20, 21, 22) se trouvant entre les zones, le piston (4) étant muni d'un élément mobile (23), l'élément mobile (23) pouvant alterner entre une première position dans laquelle le raccord de circulation des gaz offre une première résistance à l'écoulement de gaz et une deuxième position dans laquelle le raccord de circulation des gaz offre une deuxième résistance à l'écoulement de gaz, la résistance à l'écoulement du raccord de circulation des gaz changeant dès que le piston (4) atteint une position prédéterminée par rapport au cylindre (2) lorsque le piston (4) sort du cylindre (2), la résistance à l'écoulement modifiée étant maintenue lorsque le piston (4) rentre ensuite dans le cylindre (2), **se caractérisant par le fait que** le raccord de circulation des gaz comporte deux cheminements de gaz (21, 22) et que l'élément (23) obstrue un des deux cheminements de gaz (22) lorsqu'il se trouve dans la deuxième position.

2. Un dispositif de sécurité selon la revendication 1, dans lequel le raccord de circulation des gaz comporte une combinaison de passages passant par un ensemble tête (16) du piston (4), les passages définissant un premier cheminement de gaz (21) ayant une première surface de section transversale minimum et un deuxième cheminement de gaz (22) ayant une deuxième surface de section transversale minimum supérieure à la première.

3. Un dispositif de sécurité selon la revendication 2, dans lequel l'élément (23) obstrue le deuxième cheminement de gaz lorsqu'il se trouve dans la deuxième position (22).

4. Un dispositif de sécurité selon n'importe laquelle des revendications précédentes, dans lequel l'élément (23) est un élément de distributeur à tiroir, l'élément de distributeur à tiroir (23) pouvant coulisser par rapport au reste du piston (4), l'élément de distributeur à tiroir (23) pouvant se déplacer en réponse à l'entrée en contact avec une butée (15) présente dans le cylindre (2).

5. Un dispositif de sécurité selon la revendication 4, dans lequel le raccord de circulation des gaz comporte un alésage (20) s'étendant axialement de la face d'extrémité du piston (4) à la tige du piston en passant par la tête du piston (16), deux alésages transversaux (21, 22) allant de l'alésage axial (20) à la face latérale du piston, l'élément de distributeur à tiroir (23) pouvant passer à une deuxième position dans laquelle il ferme une des ouvertures (22) s'étendant jusqu'à la face latérale du piston (4).

6. Un dispositif de sécurité selon la revendication 4, dans lequel le raccord de circulation comporte un passage (57) allant d'une face d'extrémité du piston (33) à la tige du piston (34), en combinaison avec un autre passage (58) allant jusqu'à une face latérale de l'ensemble piston formant un premier cheminement et un passage annulaire entourant une partie de la tête du piston (54) entre la tête du piston (54) et l'élément de distributeur à tiroir (60) formant un deuxième cheminement, l'élément de distributeur à tiroir (60) pouvant passer de la position initiale dans laquelle le passage entourant la tête du piston (54) est ouvert à une deuxième position dans laquelle le passage entourant la tête du piston (54) est fermé.

7. Un dispositif de sécurité selon la revendication 6, dans lequel la tête du piston (54) possède une partie (56) de diamètre croissant et l'élément de distributeur à tiroir (60), qui entoure la tête du piston (54), possède un alésage (64) avec une partie correspondante (66) de diamètre croissant.

8. Un dispositif de sécurité selon n'importe laquelle des revendications précédentes, dans lequel l'élément de distributeur à tiroir (60) peut entrer en contact avec une partie (38) du cylindre (32) pour ramener l'élément (60) à sa position initiale lorsque le piston (33) revient à sa position initiale.

9. Un dispositif de sécurité selon n'importe laquelle des revendications 1 à 3, dans lequel l'élément est un élément de distributeur à tiroir (23) pouvant coulisser par rapport au reste du piston, l'élément de distributeur à tiroir (23) entourant une partie de la tige du piston (4), l'élément de distributeur à tiroir (23) pouvant alterner entre la première position, par rapport au piston, lorsque le piston va dans une direction et une deuxième position, par rapport au piston, lorsque le piston va dans la direction opposée.

10. Un dispositif de sécurité selon la revendication 9, dans lequel le raccord de circulation des gaz comprend un alésage (20) allant de la face d'extrémité du piston à la tige du piston (4) en passant par la tête du piston (16), des alésages transversaux axialement espacés (21, 22) allant de l'alésage axial (20) au côté du piston, l'élément de distributeur à tiroir (23) fermant au moins un des alésages axialement espacés (22) lorsqu'il se trouve dans sa deuxième position.

11. Un dispositif de sécurité selon la revendication 9, dans lequel l'élément de distributeur à tiroir (23) entoure une partie de la tige du piston (4) se trouvant entre la tête (16) du piston et une partie radialement agrandie (19) de la tige du piston (4), le ou les alésages axialement espacés (22) fermés par l'élément de distributeur à tiroir (23) s'ouvrant à un endroit entre la partie radialement agrandie (19) et la tête du piston (16).

12. Un dispositif de sécurité selon n'importe laquelle des revendications précédentes, dans lequel une monture (9) est prévue pour fixer le cylindre sur le châssis du véhicule.

13. Un dispositif de sécurité selon n'importe laquelle des revendications précédentes, dans lequel le cylindre est muni d'une source de gaz configurée pour être activée en réponse à un signal.

14. Un dispositif de sécurité selon la revendication 13, dans lequel la source de gaz comprend une charge pyrotechnique (42), la charge pyrotechnique étant munie d'un amorceur (46) pour amorcer la charge en réponse à un signal électrique.

15. Un dispositif de sécurité selon la revendication 12 ou 13, dans lequel plusieurs sources de gaz (42, 48) sont préparées pour une activation successive.

16. Un dispositif de sécurité selon n'importe laquelle des revendications précédentes se présentant sous la forme d'un système de levage de capot.

17. Un dispositif de sécurité selon n'importe laquelle des revendications 1 à 12 se présentant sous la forme d'un prétendeur de ceinture de sécurité.

18. Un dispositif de sécurité selon n'importe laquelle des revendications 1 à 12 se présentant sous la forme d'une contention au niveau du bassin, le piston et le cylindre (53) se trouvant à un endroit permettant de lever la partie centrale d'un coussin de siège (81) lorsque le dispositif de sécurité est actionné.
